# EUROPÄISCHE PATENTSCHRIFT

(11) **EP 4 382 811 B1**
(45) Veröffentlichungstag und Bekanntmachung des Hinweises auf die Patenterteilung: **29.10.2025**
(21) Anmeldenummer: 23213070.8
(22) Anmeldetag: 29.11.2023
(51) Int. Cl.: F24C 15/00, F22B 1/28, F24C 15/32

(54) **VORRICHTUNG ZUR DAMPFERZEUGUNG UND WASSERFÜHRENDES HAUSHALTSGERÄT MIT EINER SOLCHEN VORRICHTUNG**
DEVICE FOR GENERATING STEAM AND WATER-BEARING HOUSEHOLD APPLIANCE HAVING SUCH A DEVICE
DISPOSITIF DE PRODUCTION DE VAPEUR ET APPAREIL MÉNAGER À CIRCULATION D'EAU DOTÉ D'UN TEL DISPOSITIF

(30) Priorität: 09.12.2022 DE 102022213368
(43) Veröffentlichungstag der Anmeldung: 12.06.2024
(73) Patentinhaber: E.G.O. Elektro-Gerätebau GmbH, 75038 Oberderdingen (DE)
(72) Erfinder: Albert, Tobias, 76703 Kraichtal (DE); Block, Volker, 75015 Bretten (DE); Debelt, Dominik, 76646 Bruchsal (DE); Eigl, Sebastian, 75015 Bretten (DE); Kögel, Uwe, 75057 Kürnbach (DE); Krapp, Thomas, 76684 Östringen-Odenheim (DE); Tafferner, Michael, 76316 Malsch (DE)
(74) Vertreter: Patentanwälte Ruff, Wilhelm, Beier, Dauster & Partner mbB

(56) Entgegenhaltungen:
- EP-A1- 3 278 691
- EP-A1- 3 640 537
- EP-A2- 3 457 027
- WO-A1-02/12790
- WO-A2-2008/151798

## Beschreibung

### Anwendungsgebiet und Stand der Technik

Die Erfindung betrifft eine Vorrichtung zur Dampferzeugung, welche auch als sogenannter Dampfgenerator bekannt ist, sowie ein wasserführendes Haushaltsgerät mit einer solchen Vorrichtung zur Dampferzeugung, welches auch als sogenannter Dampfgarer, Steamer oder Dampfgarofen bekannt ist. Dabei weist die Vorrichtung zur Dampferzeugung ein Gehäuse mit Heizkammer und Heizelement darin auf, wobei ein Wassereinlass in die Heizkammer hinein führt, und ein Dampfauslass heraus führt.

Derartige Vorrichtungen sind bekannt, beispielsweise aus der DE 10 2018 217 645 A1 oder der EP 1 975 517 A1. Sie sind jeweils dazu ausgebildet, eine gewisse Menge Wasser in einem Tank aufzuheizen und zu verdampfen. Der erzeugte Dampf wird dann in einen Zubereitungsraum bzw. eine Muffel des genannten Haushaltsgeräts eingebracht, um damit beispielsweise Nahrungsmittel mit Dampf und somit schonend zuzubereiten.

Aus der WO 02/012 790 A1 ist eine Verdampfereinrichtung bekannt für ein Dampfgargerät. Dieser Verdampfer weist ein aufrecht stehendes Rohr auf als Heizkammer, in welcher Wasser erhitzt wird, bis es verdampft. Dazu ist außen an dem Rohr ein flächiges Heizelement vorgesehen. Wasser kann von unten in die Heizkammer nachgefüllt werden, und oben kann der Wasserdampf zu einem Dampfauslass austreten, um in das Dampfgargerät geführt zu werden.

Aus der EP 3 278 691 A1 ist eine weitere Verdampfereinrichtung bekannt, die ein aufrecht stehendes rundes Rohr als Heizkammer aufweist. Durch ein darin befindliches inneres und konzentrisch angeordnetes Innenrohr kann die Heizkammer in einen runden Innenbereich und einen diesen kreisförmig umgebenden Außenbereich unterteilt werden. Zum Austausch von Wasser zwischen den beiden Bereichen sind Ausnehmungen in dem Innenrohr angeordnet. Heizelemente zum Beheizen des Wassers in der Heizkammer sind außen an dem Gehäuse flächig verteilt vorgesehen.

Aus der WO 2008/0151 798 A2 ist ein Dampferzeuger bekannt für ein Dampfgargerät, der als Gehäuse ebenso ein aufrecht stehend angeordnetes rundes Rohr aufweist. Dieses Rohr weist an einer Außenseite flächig verteilte Heizelemente auf, um Wasser innerhalb des Rohres aufzuheizen und zu verdampfen, wobei dann der Dampf in das Dampfgargerät eingeleitet wird. Innerhalb der Heizkammer kann ein weiteres, konzentrisch angeordnetes Rohr angeordnet sein, welches die Heizkammer für Wasser auf die Form eines Kreisringes begrenzt. So kann das Verhältnis von Heizelementfläche zum Volumen des zu beheizenden Wassers verbessert werden für ein möglichst schnelles Aufheizen und Verdampfen von Wasser.

Aus der EP 3 457 027 A2 ist ein weiterer Dampferzeuger für ein Dampfgargerät bekannt, der ein aufrecht stehend angeordnetes kreisrundes Gehäuse aufweist, dessen Inneres eine Heizkammer für zu verdampfendes Wasser bildet. Im unteren Bereich der Heizkammer ist an ihrer Außenseite ein Heizelement flächig angeordnet. Innen in der Heizkammer ist im oberen Bereich bzw. an der Unterseite eines Deckels als Dampfauslass ein in horizontaler Ebene umlaufender spiralförmiger Kanal vorgesehen, der helfen soll, Wassertröpfchen aus dem erzeugten Dampf abzuscheiden, damit diese wieder zurück in das Wasser in der Heizkammer fließen. So soll verhindert werden, dass störende Wassertröpfchen in dem erzeugten Dampf sind.

### Aufgabe und Lösung

Der Erfindung liegt die Aufgabe zugrunde, eine eingangs genannte Vorrichtung zur Dampferzeugung sowie ein damit versehenes wasserführendes Haushaltsgerät zu schaffen, mit denen Probleme des Standes der Technik vermieden werden können und es insbesondere möglich ist, die Vorrichtung zur Dampferzeugung einfach und zuverlässig auszubilden und gut in ein Haushaltsgerät zu integrieren.

Gelöst wird diese Aufgabe durch eine Vorrichtung zur Dampferzeugung mit den Merkmalen des Anspruchs 1 sowie durch ein mit einer solchen Vorrichtung versehenes wasserführendes Haushaltsgerät mit den Merkmalen des Anspruchs 12. Vorteilhafte sowie bevorzugte Ausgestaltungen der Erfindung sind Gegenstand der weiteren Ansprüche und werden im Folgenden näher erläutert. Dabei werden manche der Merkmale nur für die Vorrichtung zur Dampferzeugung oder nur für das damit versehene Haushaltsgerät beschrieben. Sie sollen jedoch unabhängig davon sowohl für eine solche Vorrichtung als auch für ein damit versehenes Haushaltsgerät selbständig und unabhängig voneinander gelten können. Der Wortlaut der Ansprüche wird durch ausdrückliche Bezugnahme zum Inhalt der Beschreibung gemacht.

Die Vorrichtung zur Dampferzeugung weist ein Gehäuse und darin eine Heizkammer für Wasser auf, die einen Wassereinlass zur Verbindung mit einer Wasserversorgung aufweist, beispielsweise einem Wassertank oder einer Wasserleitung. Die Heizkammer weist auch einen Dampfauslass auf, der Dampf mittels Schlauchs oder Leitung in einen Zubereitungsraum eines wasserführenden Haushaltsgeräten bzw. Dampfgarofens leitet. An der Heizkammer ist ein Heizelement angeordnet bzw. vorgesehen zum Erhitzen und Verdampfen von Wasser in der Heizkammer. Das Heizelement weist einen Heizelementträger und darauf angeordnete Heizleiter auf. Vorteilhaft kann das Heizelement als Dickschicht-Heizelement mit Dickschicht-Heizleitern ausgebildet sein. Dabei sind die Heizkammer und das Heizelement in dem Gehäuse angeordnet, wobei vorzugsweise das Heizelement nur einen Teil der Heizkammer bildet. Erfindungsgemäß bildet nämlich das Heizelement eine Wandung der Heizkammer bzw. nur eine einzige Wandung, wobei es mit anderen Wandungen der Heizkammer dichtend verbunden ist, vorzugsweise durch Pressung plus Dichtung. So bildet das Heizelement mit diesen anderen Wandungen gemeinsam die an sich geschlossene Heizkammer, die eben als einzige Öffnungen den Wassereinlass und den Dampfauslass aufweist. Der Heizelementträger besteht aus Metall, wobei vorzugsweise die anderen Wandungen der Heizkammer sowie das Gehäuse aus Kunststoff bestehen, was eine einfache Herstellbarkeit ermöglicht.

Die Heizkammer ist in einer Erstreckungsrichtung länger als breit, welche Erstreckungsrichtung nach Einbau in das Haushaltsgerät die vertikale Richtung ist. In der Erstreckungsrichtung senkrecht zu Länge und Breite weist die Heizkammer eine nochmals geringere Tiefe auf. Vorteilhaft gilt dies nicht nur für die Heizkammer, sondern für die gesamte Vorrichtung bzw. deren Gehäuse. Eine elektrische Anschlussvorrichtung für die Vorrichtung und insbesondere für das Heizelement ist seitlich an einer länglichen Seite der Heizkammer an dem Gehäuse vorgesehen, insbesondere steht sie seitlich von dem Gehäuse ab. Durch diese seitliche Anordnung der Anschlussvorrichtung wird erreicht, dass sie zumindest die vorgenannte Tiefe vergrößert. So kann beim Einbau in ein erfindungsgemäßes Haushaltsgerät erreicht werden, dass die Tiefe geringfügig zunimmt aufgrund der Tiefe des Gehäuses, ohne dass die Anschlussvorrichtung hierzu beiträgt.

In Ausgestaltung der Erfindung kann die Anschlussvorrichtung als Steckanschlussvorrichtung ausgebildet sein, wobei sie Steckanschlussfahnen und/oder Steckanschlussbuchsen aufweisen kann. Diese können mit dem Heizelement elektrisch und/oder konstruktiv bzw. mechanisch verbunden sein und so eine Kontaktierung bewirken, vorteilhaft durch Anliegen bzw. Andrücken. Dies kann entweder dauerhaft sein oder einfach nur durch Anliegen bzw. Andrücken erfolgen. Alternativ könnten auch Schraubanschlüsse vorgesehen sein.

In vorteilhafter Ausgestaltung der Erfindung kann eine elektrische Kontaktierung von der Anschlussvorrichtung an das Heizelement bzw. an die Heizleiter auf der von der Heizkammer abgewandten Seite des Heizelements vorgesehen sein, welches vorteilhaft eine trockene Seite des Heizelements ist. Die zur Heizkammer weisende Seite des Heizelements bildet eine Wandung der Heizkammer und ist somit zumindest teilweise mit Wasser bzw. Dampf bedeckt. Eine elektrische Kontaktierung kann Kontaktfelder aufweisen, die mit den Heizleitern verbunden sind. Auf den Kontaktfeldern können federnd ausgebildete Kontaktarme der Anschlussvorrichtung angedrückt werden bzw. sein und so die Kontaktierung herstellen. Diese verlaufen vorzugsweise Kontaktarme parallel zueinander und nebeneinander, ein Abstand kann wenige Millimeter betragen. Die Kontaktarme können identisch sein. Alternativ können sie unterschiedlich dick oder breit sein, je nach zu übertragendem Strom bzw. elektrischer Leistung.

In bevorzugter Ausgestaltung der Erfindung ist die Heizkammer flach und das Gehäuse ist es auch, wobei die elektrische Anschlussvorrichtung von einer schmalen Seite des flachen Gehäuses absteht. Dies ist zuvor bereits angesprochen worden.

In weiterer Ausgestaltung der Erfindung kann das Heizelement rinnenartig gewölbt sein weg von der Heizkammer derart, dass eine Scheitellinie der Wölbung entlang der Erstreckungsrichtung in der Länge der Vorrichtung verläuft. Durch diese Wölbung kann das Heizelement stabil ausgebildet sein und wölbt sich oder dehnt sich bei Erwärmung in vorgegebene Richtung aus. Des Weiteren kann bei vorgegebener Breite des Gehäuses die beheizte Fläche aufgrund der Wölbung etwas vergrößert werden. Dabei kann vorgesehen sein, dass die Wölbung des Heizelements zwischen 5 % und 20 % der Breite des Heizelements entspricht bzw. ausmacht. Das Heizelement kann bevorzugt in der Draufsicht rechteckige Form aufweisen, was eine leicht herzustellende Form ist. Sie ermöglicht es auch, aus einem vorgegebenen Nutzen einfach und effizient mehrere einzelne Heizelemente zu formen. Die Wölbung kann eine gleichmäßige Rundung, sodass das Heizelement Teil eines Rohres als Nutzen sein kann. Dabei kann das Heizelement ein Mantelabschnitt von 5 % bis 20 % eines gesamten Rohres sein bzw., je nach gewünschter oder akzeptierter Wölbung, können 5 bis 20 Heizelemente aus einem runden Rohr herausgeschnitten werden.

Bei der Erfindung weist das Gehäuse eine längliche Wanne für die Heizkammer auf, in welche der Wassereinlass und der Dampfauslass münden. Diese Wanne kann gleichbleibenden Querschnitt bzw. gleichbleibende Wölbung aufweisen. Erfindungsgemäß weist die Wanne seitliche Wannenwandungen und daran einen umlaufenden Wannenrand auf. An diesem umlaufenden Wannenrand liegt das Heizelement dichtend an derart, dass die Wanne und das Heizelement die Heizkammer bilden und vollständig umschließen. Da vorteilhaft die Heizkammer flach sein soll, wie oben dargelegt worden ist, münden der Wassereinlass und/oder der Dampfauslass an den kurzen flachen Seiten in die Heizkammer. Dies weist unter anderem den Vorteil auf, dass sie so keine Fläche bedecken oder verbrauchen, an der vorteilhaft das Heizelement angeordnet ist. So kann dieses möglichst großflächig sein.

In vorteilhafter Weiterbildung der Erfindung kann um den Wannenrand eine Nut mit einer darin befindlichen Dichtung verlaufen, wobei das Heizelement umlaufend an dieser Dichtung anliegt, vorteilhaft mit ausreichendem Druck, und dabei die Dichtfunktion bewirkt. Diese Dichtung sollte wegen der zu erwartenden Temperaturen des Heizelements temperaturbeständig sein, sodass sie vorteilhaft aus Silikon oder EPDM bestehen kann. Sie kann in die genannte Nut als separat hergestellte Dichtung eingelegt werden, wobei sie als Rundschnur-Dichtung ausgebildet sein kann oder an die konkrete Form der Nut angepasst sein kann. Alternativ kann die Dichtung an den Wannenrand angespritzt sein, das vereinfacht eine Montage der Vorrichtung. Für den Kunststoff der Wanne selbst eignet sich PPS als Kunststoffmaterial, da es dauerhaft Temperaturen von etwa 160 °C übersteht und in der Spitze sogar Temperaturen über 200 °C.

Vorteilhaft weist das Gehäuse ein Gehäuseoberteil auf, welches an der Wanne, die vorzugsweise ein Gehäuseunterteil bildet, befestigt ist derart, dass das Gehäuseoberteil das Heizelement gegen die Wanne bzw. gegen die vorgenannte Dichtung drückt. Das Gehäuseoberteil kann eine umlaufende Anpressrippe einen Vorsprung aufweisen, die dem Wannenrand bzw. der Dichtung gegenüberliegen oder die außerhalb des Wannenrands über der vorgenannten Dichtung verlaufen. Eine solche Anpressrippe bzw. dieser Vorsprung können bevorzugt durchgängig umlaufen, sodass sie durchgängig umlaufend das Heizelement gegen den durchgängig umlaufenden Wannenrand oder gegen die Dichtung drücken. So ist nicht nur der mechanische Zusammenhalt des Gehäuses bzw. der Vorrichtung gewährleistet, sondern vor allem eine Dichtheit der Heizkammer, damit weder Wasser noch Dampf austreten.

In weiterer Ausgestaltung der Erfindung können die Wanne oder ein genanntes Gehäuseoberteil seitlich außerhalb des umlaufenden Wannenrands Abstützvorsprünge oder Anschläge aufweisen, an denen das Heizelement mit einem Seitenrand, insbesondere den Seitenrändern jeweils am Ende der Wölbung, anliegt. So kann die Position des Heizelements in der Vorrichtung und an der Wanne gesichert werden, was für eine genaue und einfach herzustellende Verbindung wichtig ist.

In Weiterbildung der Erfindung ist vorteilhaft ein Gehäuseoberteil lösbar an der Wanne befestigt, wobei insbesondere hierfür eine Rast-Verbindung oder eine Clips-Verbindung vorgesehen sein. Dabei kann vorteilhaft eine Befestigung rund um die Heizkammer umlaufend vorgesehen sein. Dies ist besonders vorteilhaft auch an oder nahe den Endbereichen der Heizkammer nahe am Wassereinlass/Dampfauslass so vorgesehen.

In Ausgestaltung der Erfindung ist die elektrische Anschlussvorrichtung mit einem Anschlussgehäuse an einem Gehäuseoberteil ausgebildet, wobei insbesondere das Anschlussgehäuse einteilig und einstückig daran angeformt bzw. angespritzt ist. Das Anschlussgehäuse sollte möglichst nicht in Dickenrichtung über das Gehäuse übersteht oder überragen, so dass die Vorrichtung durch die elektrische Anschlussvorrichtung bzw. das Anschlussgehäuse nicht dicker wird.

In Ausgestaltung der Erfindung kann das Anschlussgehäuse an bzw. zu mindestens einer Seite hin offen sein, wobei von dieser Seite aus Steckereinheiten in das Anschlussgehäuse eingeschoben werden können und dann lösbar darin befestigbar sind. Sie können insbesondere mittels einer Rastvorrichtung darin befestigbar sein, also eingerastet werden. Dabei sind die Steckereinheiten elektrisch mit dem Heizelement kontaktiert, vorteilhaft mittels der vorbeschriebenen Kontaktarme. Die Steckereinheiten können insbesondere Kunststoffgehäuse sein, in denen Steckanschlussfahnen oder Steckanschlussbuchsen angeordnet sein können. Alternativ können die Steckereinheiten als Steckanschlussfahnen oder Steckanschlussbuchsen in einem aus Kunststoff bestehenden Halteteil gehalten sein. Dabei können die Steckanschlussfahnen oder Steckanschlussbuchsen mit Kontaktarmen versehen sein, beispielsweise angeformt, befestigt oder angeschweißt, die in der Einschubrichtung abstehen. Dabei kann das Halteteil in das Anschlussgehäuse einschiebbar ausgebildet sein, wobei es dann lösbar darin befestigt werden kann. Dabei kann es mittels einer Rasteinrichtung befestigbar sein.

In weiterer Ausgestaltung der Erfindung kann das Gehäuseoberteil mit geringem Abstand über dem Heizelement verlaufen, wobei ein Abstand zwischen 1 mm und 20 mm betragen kann. Dabei kann das Gehäuseoberteil Lüftungsöffnungen aufweisen zur Belüftung bzw. Kühlung des Heizelements, wie dies an sich bekannt ist. Dabei kann das Gehäuseoberteil im Bereich oberhalb des Heizelements weitgehend wabenförmig ausgebildet ist mit Stegen und wabenförmigen Zwischenräumen dazwischen. Dadurch ist eine gute Belüftung möglich, und eine ausreichende Stabilität wird auch erreicht.

In Ausgestaltung der Erfindung kann in der Heizkammer ein Gestrick oder Gewirk aus dünnem Material angeordnet sein, insbesondere mit oder aus Draht oder Kunststofffäden. Dieses kann mindestens in einem Bereich nahe am Dampfauslass und/oder am Wassereinlass angeordnet sein. Dadurch kann eine Verkalkung in der Heizkammer reduziert werden. Außerdem kann ein zu starkes Sprudeln in der Heizkammer vermieden werden, wenn das Wasser darin kocht.

Ein erfindungsgemäßes wasserführendes Haushaltsgerät, das insbesondere als Dampf-Backofen oder als Dampfgarer ausgebildet ist, weist ein Außengehäuse und einen Zubereitungsraum zur Zubereitung von Gargut mittels Dampfs auf, vorzugsweise mittels heißem Dampf. Dabei ist außerhalb des Zubereitungsraums und insbesondere dahinter innerhalb des Außengehäuses eine zuvor beschriebene Vorrichtung zur Dampferzeugung angeordnet. Diese Vorrichtung zur Dampferzeugung ist dabei in ihrer Längs-Erstreckungsrichtung aufrecht angeordnet. So kann ein Dampfauslass oben an der Vorrichtung sein, so dass Dampf leicht ausströmen kann. Vorzugsweise ist die Vorrichtung zur Dampferzeugung flach und mit einer Flachseite zum Zubereitungsraum hin weisend angeordnet ist, damit die Einbautiefe möglichst gering ist.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schematische Rückansicht eines erfindungsgemäßen Dampfgarofens als wasserführendes Haushaltsgerät mit Dampferzeuger,
- Fig. 2: einen erfindungsgemäßen Dampferzeuger in Vorderansicht,
- Fig. 3: eine Schnittdarstellung durch den Dampferzeuger aus Fig. 2,
- Fig. 4: eine Draufsicht auf das Heizelement mit Heizleiter, Temperatursensor und Kontaktfeldern und
- Fig. 5: eine Schrägansicht auf ein Anschlussgehäuse mit einschiebbaren Halteteilen samt Steckanschlussfahnen darin.

### Detaillierte Beschreibung der Ausführungsbeispiele

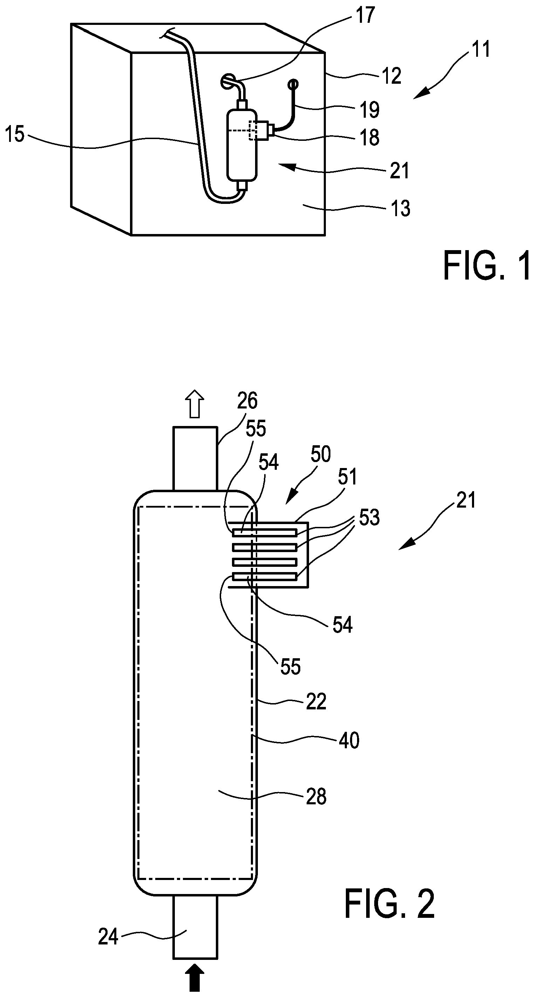

In der Fig. 1 ist ein erfindungsgemäßer Dampfgarofen 11 als wasserführendes Haushaltsgerät in Rückansicht sehr vereinfacht dargestellt, insbesondere ohne vorteilhaft noch vorgesehene Abdeckung, wie er an sich aus dem Stand der Technik bekannt ist. Der Dampfgarofen 11 weist ein Gehäuse 12 auf, in dessen Inneren eine hier nicht dargestellte, aber aus dem Stand der Technik bekannte Ofenmuffel als eingangs genannter Zubereitungsraum angeordnet ist. An einer Rückseite 13 des Dampfgarofens 11 ist ein erfindungsgemäßer Dampferzeuger 21 angeordnet. Er kann vorteilhaft noch durch eine Abdeckung darüber abgedeckt sein und so vor Beschädigung geschützt sein. Der Dampferzeuger 21 weist als Anschluss einen Wasserschlauch 15 auf, der von unten herangeführt ist. Oben aus dem Dampferzeuger 21 geht eine Dampfleitung 17 heraus, die in den genannten Zubereitungsraum hineinführt. Um den Dampferzeuger 21 herum, oder zumindest zum Gehäuse 12 des Dampfgarofens 11 hin, ist vorteilhaft eine Wärmedämmung vorgesehen. Elektrisch angeschlossen wird der Dampferzeuger 21 mittels eines Steckers 18 samt Anschlusskabel 19, vorteilhaft an eine Steuerung und/oder Leistungsversorgung. Dies wird nachfolgend noch erläutert.

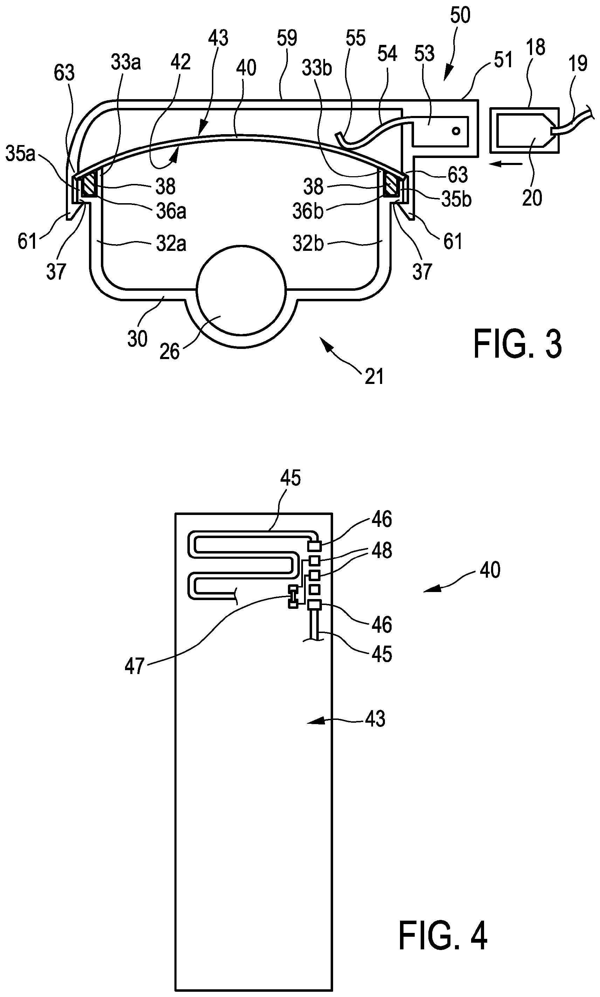

In der vergrößerten Ansicht der Fig. 2 ist zu erkennen, dass der Dampferzeuger 21 ein relativ flaches und längliches sowie gemäß Fig. 1 aufrechtstehend montiertes Gehäuse 22 aufweist, vgl. auch die Fig. 3. Der Dampferzeuger 21 ist etwa dreimal so lang wie breit und gemäß Fig. 3 ist er bzw. zumindest eine im Inneren gebildete Heizkammer 28 in etwa doppelt so breit wie dick. Somit ist ersichtlich, dass der Dampferzeuger 21 im an den Dampfgarofen 11 gemäß Fig. 1 angebauten Zustand die Einbautiefe nach hinten möglichst wenig erhöht. Er kann auch weiter seitlich versetzt sein, um beispielsweise neben einem Antriebsmotor für einen Umluft-Ventilator Platz zu finden.

Das Gehäuse 22 des Dampferzeugers 21 weist unten einen Wassereinlass 24 als Stutzen auf, an dem der Wasserschlauch 15 dichtend angeschlossen ist. Eine Wasserversorgung kann wie üblich erfolgen, insbesondere gesteuert. Oben aus dem Dampferzeuger 21 geht ein Dampfauslass 26 in Stutzenform ab. Er ist mit der Dampfleitung 17 verbunden, durch welche Dampf aus der Heizkammer 28 herausgelassen und in den Zubereitungsraum des Dampfgarofens 11 eingeleitet wird.

Aus der Schnittdarstellung der Fig. 3 ist die flache Ausgestaltung des Dampferzeugers 21 sowie vor allem der Heizkammer 28 zu ersehen. Diese ist wannenartig ausgebildet im unteren Bereich mit einem Boden 30, von dem aus sich eine linke Seitenwand 32a und eine rechte Seitenwand 32b nach oben erstrecken. Die lateralen Wände bzw. Seitenwände 32a und 32b weisen oben jeweils einen Wannenrand 33a und 33b auf. Dieser ist vollständig umlaufend und vorzugsweise ununterbrochen. Etwas außerhalb dieses Wannenrands 33a und 33b verläuft ein um wenige Millimeter nach außen versetzter Außenrand 35a und 35b. Dazwischen ist eine Nut 36a und 36b gebildet, in welche eine umlaufende Dichtung 38 eingelegt sein kann. Alternativ kann sie eingespritzt sein. Im nicht montierten Zustand steht die Dichtung 38 über die Wannenränder 33 und Außenränder 35 nach oben über. Dies ist für eine sichere Dichtfunktion vorteilhaft.

Von oben ist auf das wannenartige Unterteil des Gehäuses 22 ein längliches gewölbtes Heizelement 40 aufgelegt, wobei es auf alle Fälle dichtend, und zwar umlaufend dichtend, an der Dichtung 38 anliegt. Möglicherweise kann es auch an einem der Wannenränder 33a oder 33b oder Außenränder 35a oder 35b anliegen. Dabei ist dann aber immer eine zuverlässige Abdichtung mittels der Dichtung 38 gewährleistet.

Das Heizelement 40 ist erkennbar gewölbt, und zwar weg vom Boden 30 der Heizkammer 28 und somit auch weg von der Heizkammer 28 selbst. So wird zum einen deren Volumen etwas vergrößert. Zum anderen kann so das Heizelement 40 eigenstabiler ausgebildet sein. Auch eine Dichtwirkung bei starker Erwärmung des Heizelements 40 in seinem Heizbetrieb bzw. beim Betrieb zum Erzeugen von Dampf ist definierter und somit besser beherrschbar, da durch die vorgegebene Wölbung eine noch stärkere Wölbung bei Erwärmung ja in dieselbe Richtung geht. Dieses Heizelement 40 ist in Fig. 2 strichpunktiert dargestellt. Es erstreckt sich nicht nur über fast die gesamte Breite des Dampferzeugers 21, sondern auch fast über die gesamte Höhe. Somit wird eine möglichst große Heizfläche erreicht für eine möglichst gute Dampferzeugung.

Das Heizelement 40 weist einen Heizelementträger 41 auf, vorteilhaft aus Metall. Dabei kann der Heizelementträger 41 aus einem Rohr herausgeschnitten sein als eine Art Vielfachnutzen, was die Herstellung vereinfacht und effizienter macht. Eine Wasserseite 42 des metallischen Heizelementträgers kann blank sein, alternativ kann sie beschichtet sein für einen besseren Wärmeeintrag und/oder verbesserte Korrosionsfähigkeit und/oder verbesserte Antikalk-Eigenschaften. Eine in der Fig. 3 nach oben weisende und in der Fig. 4 dargestellte Heizseite 43 trägt die Funktionselemente des Heizelements 40. Diese Heizseite 43 ist vorteilhaft mit einer flächigen elektrischen Isolierung versehen, beispielsweise einer Glasschicht oder einer glasartigen Schicht. Darauf aufgebracht ist mindestens ein Heizleiter 45, hier in angedeuteter Mäanderform, der nur teilweise dargestellt ist. Er kann eine einigermaßen gleiche Flächenleistung über die gesamte oder die größte Fläche der Heizseite 43 bilden. Alternativ kann er dort für eine verstärkte Heizleistung ausgebildet sein, wo sich im unteren Bereich des Dampferzeugers 21, wie in Fig. 1 durch eine punktierte Linie als Wasserstand angedeutet ist, das zu erhitzende Wasser befindet. Der Heizleiter 45 ist an seinen Enden mit Kontaktfeldern 46 versehen bzw. endet dort.

Des Weiteren ist ein diskreter Temperatursensor 47 auf der Heizseite 43 vorgesehen, beispielsweise ausgebildet als SMD-Bauteil. Der Temperatursensor 47 ist mit zwei Kontaktfeldern 48 verbunden. Weitere ähnliche Temperatursensoren 47 können vorgesehen sein, beispielsweise verteilt in einem Bereich, in dem eigentlich immer Wasser ist, so dass damit eine Wassertemperatur im Inneren der Heizkammer 28 erfasst werden kann. Ein im oberen Bereich angeordneter Temperatursensor 47 kann eine Dampftemperatur erfassen.

Des Weiteren ist vorteilhaft eine nicht näher dargestellte, aber aus dem Stand der Technik bekannte flächige Temperaturüberwachung vorgesehen, die mittels eines temperaturabhängigen Kriechstroms oder temperaturabhängigen Ableitstroms arbeiten kann. Hierfür wird verwiesen auf den bekannten Stand der Technik, beispielsweise in Form der DE 10 2015 218 120 A1 oder der EP 3 840 528 A1. Auch eine solche Temperaturerfassung kann eigene Kontaktfelder aufweisen.

Wie aus der Fig. 4 zu ersehen ist, sind die Kontaktfelder 46 und 48 entlang einer Linie und mit gleichem Abstand zu einem rechten Außenrand des Heizelementträgers 41 angebracht. Dies dient zur verbesserten elektrischen Kontaktierung. Dafür ist eine elektrische Anschlussvorrichtung 50 vorgesehen, die ein Anschlussgehäuse 51 aufweist. Dieses ist an einem Gehäusedeckel 59 als Gehäuseoberteil für das Gehäuse 22 des Dampferzeugers 21 angeordnet bzw. einstückig angeformt. In dem Anschlussgehäuse 51 sind mehrere Steckanschlussfahnen 53 fest angeordnet, von denen an ihrem hinteren Ende ein länglicher und dünner Kontaktarm 54 abgeht. Dieser ist nach unten gebogen und weist ein abgebogenes oder hakenförmiges Kontaktende 55 auf. Dieses Kontaktende 55 liegt mit dem nach unten gebildeten Vorsprung jeweils auf einem der Kontaktfelder 46 oder 48 an. So kann eine elektrische Kontaktierung an das Heizelement 40, und zwar sowohl für die große elektrische Leistung für den Heizbetrieb als auch für kleine elektrische Leistungen von Temperatursensoren odgl., mittels angedrückter Kontakte erfolgen.

Von rechts kann gemäß Fig. 3 ein Stecker 18 in das Anschlussgehäuse 51 gesteckt werden, der mit dem Anschlusskabel 19 verbundene Steckanschlussbuchsen 20 in seinem Inneren aufweist. Eine Steckverbindung kann durch zusätzliche Verbindungsmittel wie beispielsweise Rastungen odgl. gesichert sein.

Die seitliche Anordnung des elektrischen Anschlusses bzw. der elektrischen Anschlussvorrichtung 50 samt Stecker 18 ergibt eine sehr flache Bauweise an der Rückseite des Dampfgarofens 11. Des Weiteren kann so der Steckvorgang für den elektrischen Anschluss sicher und leicht durchgeführt werden. Ebenso sind auch Reparatur- und Wartungsarbeiten komfortabel möglich. Der elektrische Anschluss vergrößert die Bautiefe für den Dampferzeuger 21 nicht.

Einerseits ist es möglich, die Steckanschlussfahnen 53 samt Kontaktarmen 54 einzeln und fest in dem Anschlussgehäuse 51 zu montieren, beispielsweise einzupressen oder darin zu verrasten. Alternativ könnten sie auch direkt eingespritzt sein. Dann wird der elektrische Kontakt an die Kontaktfelder 46 und 48 hergestellt, wenn der Gehäusedeckel 59 befestigt wird. Diese Befestigung erfolgt mittels der abstehenden Rasthaken 61, die über Rastvorsprünge 37 einrasten, die unter dem Außenrand 35a und 35b ausgebildet sind. Diese Rastverbindungen sind vorteilhaft umlaufend vorgesehen, besonders vorteilhaft sogar an den schmalen Enden des Dampferzeugers 21 neben Wassereinlass 24 und Dampfauslass 26. Wie aus der Fig. 3 auch zu ersehen ist, sind an dem Gehäusedeckel 59 etwas oberhalb der Rasthaken 61 umlaufende Andruckvorsprünge 63 vorgesehen. Diese befinden sich oberhalb der oberen Enden der Außenränder 35a und 35b und drücken den Außenbereich des Heizelements 40 gegen die Dichtung 38 und in Richtung auf diese Außenränder 35 zu. So ist eine feste, sichere und dauerhaft abgedichtete Anordnung des Heizelements 40 an der Heizkammer 28, deren Deckel es bildet, möglich und gewährleistet.

Aus der Fig. 3 ist gut zu ersehen, wie beim Andrücken des Gehäusedeckels 59 samt elektrischer Anschlussvorrichtung 50 gegen das Heizelement 40 und den unteren Teil des Gehäuses 22 des Dampferzeugers 22 die elektrische Verbindung an das Heizelement 40 entsteht. Dabei ist vorgesehen, dass das Heizelement 40 bereits an dem unteren Teil des Gehäuses 22 angeordnet ist, möglicherweise vorfixiert ist. Dafür könnten beispielsweise an den Außenrändern 35a und 35b Vorsprünge, möglicherweise als kleine Rasthaken odgl., ausgebildet sein, die von unten kommend das Heizelement 40 an seiner Oberseite 43 übergreifen und in seiner gewünschten Position halten bzw. vorfixieren. Wird nun der Gehäusedeckel 59 mit den Kontaktarten 54 am unteren Teil fest gerastet, so liegen diese Kontaktarme 54 mit den freien Kontaktenden 55 an den Kontaktfeldern 46 und 48 an.

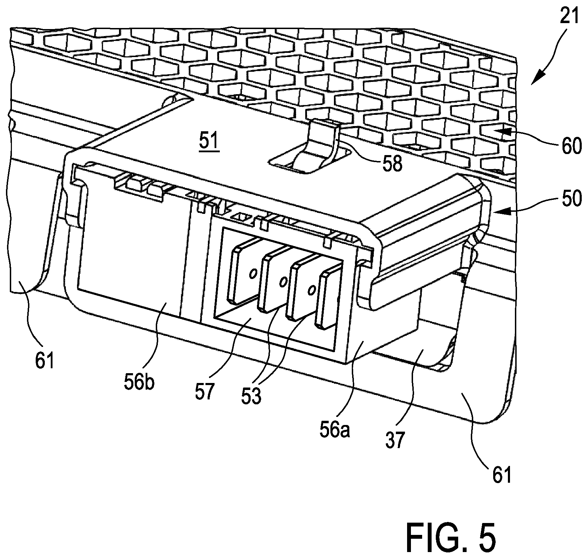

Als Alternative kann es auch vorgesehen sein, dass die einzelnen Steckanschlussfahnen 53 nicht fest im Anschlussgehäuse 51 angeordnet werden, bevor der Gehäusedeckel 59 aufgerastet wird. Dann können Gruppen von Steckanschlussfahnen, beispielsweise zwei Gruppen, alternativ auch alle Steckanschlussfahnen, in eigenen Halteteilen angeordnet sein, die dann entsprechend der Steckrichtung der Fig. 3 von außen in das Anschlussgehäuse 51 eingesteckt werden. Sie können darin durch Rasten odgl. befestigt sein. Auch dabei kommen die Kontaktenden 55 der Kontaktarme 54 auf den Kontaktfeldern 46 und 48 zu liegen und stellen so den elektrischen Kontakt her. Dies ist in der Fig. 5 dargestellt. Das Anschlussgehäuse 51 weist ein rechtes Halteteil 56a mit mehreren Steckanschlussfahnen 53 in einem Innenraum 57a auf. Es ist gemeinsam, alternativ auch getrennt davon, mit einem linken Halteteil 56b samt hier nicht dargestellten, weiteren Steckanschlussfahnen über seitlich abstehende Vorsprünge und Aufnahmeschienen in das Anschlussgehäuse 51 eingeschoben. Über eine nicht im Detail dargestellte Rasteinrichtung, von der ein manuell betätigbarer Rastarm 58 nach oben absteht, werden die Halteteile 56a und 56b im Anschlussgehäuse 51 gehalten. Bei diesem Einschieben der Halteteile 56 gelangen, wie anhand Fig. 3 vorgestellt werden kann, wiederum die freien Kontaktenden 55 der abstehenden Kontaktarme 54 an den Kontaktfeldern 46 und 48 zur Anlage, und somit ergibt sich die elektrische Kontaktierung.

Aus der Fig. 5 ist auch zu ersehen, dass die Oberseite des Gehäusedeckels 59 mit einer Wabenstruktur 60 als eingangs genannte Lüftungsöffnungen für das Heizelement 40 versehen ist. Diese verleiht dem Gehäusedeckel 59 gleichzeitig eine ausreichende mechanische Stabilität.

## Patentansprüche

1. Vorrichtung (21) zur Dampferzeugung geeignet für ein wasserführendes Haushaltsgerät, mit:
- einem Gehäuse (22),
- einer Heizkammer (28) für Wasser, die einen Wassereinlass (24) zur Verbindung mit einer Wasserversorgung aufweist und die einen Dampfauslass (26) aufweist,
- einem Heizelement (40) an der Heizkammer (28) zum Erhitzen und Verdampfen von Wasser darin, wobei das Heizelement (40) einen Heizelementträger (41) und darauf angeordnete Heizleiter (45) aufweist, wobei vorzugsweise das Heizelement (40) als Dickschicht-Heizelement mit Dickschicht-Heizleitern ausgebildet ist,
wobei:
- die Heizkammer (28) und das Heizelement (40) in dem Gehäuse (22) angeordnet sind,
- das Heizelement (40) eine Wandung der Heizkammer (28) bildet und mit anderen Wandungen der Heizkammer (28) dichtend verbunden ist,
- der Heizelementträger (41) aus Metall besteht,
- eine elektrische Anschlussvorrichtung (50) für die Vorrichtung (21) seitlich an einer länglichen Seite der Heizkammer (28) an dem Gehäuse (22) vorgesehen ist, insbesondere seitlich von dem Gehäuse (22) absteht,
**dadurch gekennzeichnet, dass**
- die Heizkammer (28) in einer Erstreckungsrichtung länger ist als breit und tief in beiden Erstreckungsrichtungen senkrecht dazu,
- das Gehäuse (22) eine längliche Wanne (30) für die Heizkammer (28) aufweist, in welche der Wassereinlass (24) und der Dampfauslass (26) münden, wobei die Wanne (30) an seitlichen Wannenwandungen einen umlaufenden Wannenrand (33a, 33b) aufweist, an den das Heizelement (40) dichtend anliegt derart, dass die Wanne (30) und das Heizelement (40) die Heizkammer (28) bilden und vollständig umschließen.

2. Vorrichtung nach Anspruch 1, **dadurch gekennzeichnet, dass** die Anschlussvorrichtung (50) als Steckanschlussvorrichtung ausgebildet ist mit Steckanschlussfahnen (53) oder Steckanschlussbuchsen, die vorzugsweise mit dem Heizelement (40) elektrisch und/oder konstruktiv bzw. mechanisch verbunden sind.

3. Vorrichtung nach Anspruch 1 oder 2, **dadurch gekennzeichnet, dass** die elektrische Kontaktierung mit den Heizleitern (45) verbundene Kontaktfelder (46, 48) aufweist, auf die federnd ausgebildete Kontaktarme (54) der Anschlussvorrichtung (50) angedrückt sind, wobei insbesondere die Kontaktarme (54) parallel zueinander und nebeneinander verlaufen.

4. Vorrichtung nach einem der vorhergehenden Ansprüche, **dadurch gekennzeichnet, dass** das Heizelement (40) rinnenartig gewölbt ist weg von der Heizkammer (28) derart, dass eine Scheitellinie der Wölbung entlang der Erstreckungsrichtung verläuft, wobei vorzugsweise die Wölbung des Heizelements (40) zwischen 5 % und 20 % der Breite des Heizelements (40) entspricht, wobei insbesondere das Heizelement (40) in der Draufsicht rechteckige Form aufweist, wobei vorzugsweise die Wölbung eine gleichmäßige Rundung ist und das Heizelement (40) ein Mantelabschnitt von 5 % bis 20 % eines gesamten Rohres ist.

5. Vorrichtung nach einem der vorhergehenden Ansprüche, **dadurch gekennzeichnet, dass** um den Wannenrand (33a, 33b) eine Nut (36a, 36b) mit einer darin eingelegten Dichtung (38) verläuft, wobei das Heizelement (40) umlaufend an der Dichtung (38) dichtend anliegt.

6. Vorrichtung nach einem der vorhergehenden Ansprüche, **dadurch gekennzeichnet, dass** das Gehäuse (22) ein Gehäuseoberteil (59) aufweist, welches an der Wanne (30), die vorzugsweise ein Gehäuseunterteil bildet, befestigt ist derart, dass das Gehäuseoberteil (59) das Heizelement (40) gegen die Wanne (30) bzw. gegen die Dichtung (38) nach Anspruch 5 drückt, wobei vorzugsweise das Gehäuseoberteil (59) eine umlaufende Anpressrippe (63) aufweist, die dem Wannenrand (33a, 33b) gegenüberliegt oder die außerhalb des Wannenrands (33a, 33b) über der Dichtung (38) nach Anspruch 5 verläuft, wobei insbesondere die Anpressrippe (63) durchgängig umlaufend verläuft und durchgängig umlaufend das Heizelement (40) gegen den durchgängig umlaufenden Wannenrand (33a, 33b) oder gegen die Dichtung (38) drückt.

7. Vorrichtung nach einem der vorhergehenden Ansprüche, **dadurch gekennzeichnet, dass** die Wanne (30) oder ein Gehäuseoberteil (59) seitlich außerhalb des umlaufenden Wannenrands (33a, 33b) Abstützvorsprünge (35a, 35b) aufweist, an denen das Heizelement (40) mit einem Seitenrand, insbesondere den Seitenrändern jeweils am Ende der Wölbung, anliegt zur Fixierung der Position des Heizelements (40) in der Vorrichtung (21) und an der Wanne (30).

8. Vorrichtung nach einem der vorhergehenden Ansprüche, **dadurch gekennzeichnet, dass** ein Gehäuseoberteil (59) lösbar an der Wanne (30) befestigt ist, insbesondere mittels Rast-Verbindung (37, 61) oder mittels Clips-Verbindung, wobei vorzugsweise eine Befestigung rund um die Heizkammer (28) umlaufend vorgesehen ist, vorzugsweise auch an oder nahe den Endbereichen der Heizkammer (28) nahe am Wassereinlass (24)/Dampfauslass (26).

9. Vorrichtung nach einem der vorhergehenden Ansprüche, **dadurch gekennzeichnet, dass** die elektrische Anschlussvorrichtung (50) mit einem Anschlussgehäuse (51) an einem Gehäuseoberteil (59) ausgebildet ist, wobei insbesondere das Anschlussgehäuse (51) einteilig und einstückig daran angeformt ist und/oder nicht in Dickenrichtung über das Gehäuse (22) übersteht oder überragt, wobei vorzugsweise das Anschlussgehäuse (51) zu mindestens einer Seite hin offen ist, wobei von dieser Seite aus Steckereinheiten (18) in das Anschlussgehäuse (51) einschiebbar sind und lösbar darin befestigbar sind, wobei die Steckereinheiten (18) elektrisch mit dem Heizelement (40) kontaktiert sind, insbesondere mittels der Kontaktarme (54) nach Anspruch 3.

10. Vorrichtung nach Anspruch 9, **dadurch gekennzeichnet, dass** die Steckereinheiten (18) Steckanschlussfahnen oder Steckanschlussbuchsen (20) aufweisen, die in einem aus Kunststoff bestehenden Halteteil gehalten sind, wobei vorzugsweise Kontaktarme (54) nach Anspruch 3 in der Einschubrichtung abstehen, wobei insbesondere das Halteteil in das Anschlussgehäuse (51) einschiebbar ist und lösbar darin befestigbar ist, vorzugsweise mittels einer Rasteinrichtung befestigbar ist.

11. Vorrichtung nach einem der Ansprüche 7 bis 10, **dadurch gekennzeichnet, dass** das Gehäuseoberteil (59) mit Abstand zwischen 1 mm und 20 mm über dem Heizelement (40) verläuft, wobei insbesondere das Gehäuseoberteil (59) Lüftungsöffnungen aufweist zur Belüftung bzw. Kühlung des Heizelements (40), wobei vorzugsweise das Gehäuseoberteil (59) im Bereich oberhalb des Heizelements (40) weitgehend wabenförmig ausgebildet ist mit Stegen und wabenförmigen Zwischenräumen (60) dazwischen.

12. Wasserführendes Haushaltsgerät (11), insbesondere Dampf-Backofen oder Dampfgarer, mit einem Außengehäuse (12) und mit einem Zubereitungsraum zur Zubereitung von Gargut mittels Dampfes, wobei außerhalb des Zubereitungsraums, und insbesondere dahinter innerhalb des Außengehäuses (12), eine Vorrichtung (21) zur Dampferzeugung nach einem der vorhergehenden Ansprüche an dem Haushaltsgerät (11) angeordnet ist.

13. Wasserführendes Haushaltsgerät (11) nach Anspruch 12, **dadurch gekennzeichnet, dass** die Vorrichtung (22) zur Dampferzeugung in ihrer Längs-Erstreckungsrichtung aufrecht angeordnet ist.

## Claims

1. A steam generating device (21) suitable for a water-using household appliance, comprising:
- a housing (22),
- a water heating chamber (28) having a water inlet (24) for connection to a water supply and having a steam outlet (26),
- a heating element (40) on the heating chamber (28) for heating and vaporizing water therein, wherein the heating element (40) comprising a heating element support (41) and heating conductors (45) arranged thereon, wherein the heating element (40) is preferably designed as a thick-film heating element with thick-film heating conductors,
wherein:
- the heating chamber (28) and the heating element (40) are arranged in the housing (22),
- the heating element (40) forms a wall of the heating chamber (28) and is connected in a sealing manner to other walls of the heating chamber (28),
- the heating element support (41) is made of metal,
- an electrical connection device (50) for the device (21) is provided on the side of an elongated side of the heating chamber (28) on the housing (22), in particular protruding from the side of the housing (22),
**characterized in that**
- the heating chamber (28) is longer than it is wide in one direction of extension and deep in both directions of extension perpendicular thereto,
- the housing (22) has an elongated trough (30) for the heating chamber (28), into which the water inlet (24) and the steam outlet (26) open, wherein the trough (30) has a circumferential trough rim (33a, 33b) on lateral trough walls (33a, 33b) on the side walls of the trough, against which the heating element (40) rests in a sealing manner such that the trough (30) and the heating element (40) form and completely enclose the heating chamber (28).

2. Device according to claim 1, **characterized in that** the connection device (50) is designed as a plug-in connection device with plug-in connection tabs (53) or plug-in connection sockets, which are preferably electrically and/or structurally or mechanically connected to the heating element (40).

3. Device according to claim 1 or 2, **characterized in that** the electrical connection has electrical contact fields (46, 48) connected to the heating conductors (45) to which spring-loaded contact arms (54) of the connection device (50) are pressed, wherein in particular the contact arms (54) run parallel to each other and next to each other.

4. Device according to one of the preceding claims, **characterized in that** the heating element (40) is curved away from the heating chamber (28) in a channel-like manner such that a crest line of the curvature runs along the direction of extension, wherein the curvature of the heating element (40) preferably corresponds to between 5% and 20% of the width of the heating element (40), wherein, in particular, the heating element (40) has a rectangular shape in plan view, wherein, preferably, the curvature is a uniform rounding and the heating element (40) is a jacket section of 5% to 20% of an entire pipe.

5. Device according to one of the preceding claims, **characterized in that** a groove (36a, 36b) with a seal (38) inserted therein runs around the trough rim (33a, 33b), wherein the heating element (40) sealingly abuts the seal (38) around its circumference.

6. Device according to one of the preceding claims, **characterized in that** the housing (22) has an upper housing part (59) which is fastened to the trough (30), which preferably forms a lower housing part, in such a way that the upper housing part (59) presses the heating element (40) against the trough (30) or against the seal (38) according to claim 5, wherein preferably the upper housing part (59) has a circumferential pressure rib (63) which is opposite the trough rim (33a, 33b) or which extends outside the trough rim (33a, 33b) above the seal (38) according to claim 5, wherein in particular the pressure rib (63) extends continuously around the circumference and continuously presses the heating element (40) against the continuously surrounding trough rim (33a, 33b) or against the seal (38).

7. Device according to one of the preceding claims, **characterized in that** the trough (30) or a upper housing part (59) has support projections (35a, 35b) on the side outside the circumferential trough rim (33a, 33b) on which the heating element (40) rests with a side edge, in particular the side edges at each end of the curvature, in order to fix the position of the heating element (40) in the device (21) and on the trough (30).

8. Device according to one of the preceding claims, **characterized in that** an upper housing part (59) is detachably fastened to the trough (30), in particular by means of a snap connection (37, 61) or by means of a clip connection, wherein preferably a fastening is provided around the heating chamber (28), preferably also at or near the end areas of the heating chamber (28) close to the water inlet (24)/steam outlet (26).

9. Device according to one of the preceding claims, **characterized in that** the electrical connection device (50) is formed with a connection housing (51) on an upper housing part (59), wherein, in particular, the connection housing (51) is formed thereon in one piece and/or does not protrude beyond the housing (22) in the thickness direction, wherein the connection housing (51) is preferably open on at least one side, wherein plug units (18) can be inserted into the connection housing (51) from this side and can be detachably secured therein, wherein the plug units (18) are electrically contacted to the heating element (40), in particular by means of the contact arms (54) according to claim 3.

10. Device according to claim 9, **characterized in that** the plug units (18) have plug connection tabs or plug connection sockets (20) which are held in a retaining part made of plastic, wherein contact arms (54) according to claim 3 preferably protrude in the insertion direction, wherein in particular the retaining part can be inserted into the connection housing (51) and can be detachably secured therein, preferably by means of a latching device.

11. Device according to one of claims 7 to 10, **characterized in that** the upper housing part (59) extends at a distance of between 1 mm and 20 mm above the heating element (40), wherein, in particular, the upper housing part (59) has ventilation openings for ventilating or cooling the heating element (40), wherein the upper housing part (59) in the area above the heating element (40) is preferably designed to be largely honeycomb-shaped with webs and honeycomb-shaped spaces (60) between them.

12. Water-carrying household appliance (11), in particular a steam oven or steam cooker, with an outer housing (12) and a cooking chamber for cooking food using steam, wherein outside the cooking chamber, and in particular behind it inside the outer housing (12), a device (21) for generating steam according to one of the preceding claims is arranged on the household appliance (11).

13. Water-carrying household appliance (11) according to claim 12, **characterized in that** the device (21) for generating steam is arranged upright in its longitudinal direction of extension.

## Revendications

1. Dispositif générateur de vapeur (21) adapté à un appareil ménager utilisant de l'eau, comprenant :
- un boîtier (22),
- une chambre de chauffage d'eau (28) comportant une entrée d'eau (24) pour le raccordement à une alimentation en eau et une sortie de vapeur (26),
- un élément chauffant (40) sur la chambre de chauffage (28) pour chauffer et vaporiser l'eau qui s'y trouve, dans lequel l'élément chauffant (40) comprend un support d'élément chauffant (41) et des conducteurs chauffants (45) disposés sur celui-ci, dans lequel l'élément chauffant (40) est de préférence conçu comme un élément chauffant à couche épaisse avec des conducteurs chauffants à couche épaisse,
dans lequel :
- la chambre de chauffage (28) et l'élément chauffant (40) sont disposés dans le boîtier (22),
- l'élément chauffant (40) forme une paroi de la chambre de chauffage (28) et est relié de manière étanche aux autres parois de la chambre de chauffage (28),
- le support d'élément chauffant (41) est en métal,
- un dispositif de connexion électrique (50) pour le dispositif (21) est prévu sur le côté d'un côté allongé de la chambre de chauffage (28) sur le boîtier (22), en particulier en saillie par rapport au côté du boîtier (22),
**caractérisé en ce que**
- la chambre de chauffage (28) est plus longue que large dans une direction d'extension et profonde dans les deux directions d'extension perpendiculaires à celle-ci,
- le boîtier (22) comporte une auge allongée (30) pour la chambre de chauffage (28), dans laquelle débouchent l'entrée d'eau (24) et la sortie de vapeur (26), l'auge (30) présentant un bord périphérique (33a, 33b) sur les parois latérales (33a, 33b) de la cuvette, contre lesquelles l'élément chauffant (40) repose de manière étanche, de telle sorte que l'auge (30) et l'élément chauffant (40) forment et entourent complètement la chambre de chauffage (28).

2. Dispositif selon la revendication 1, **caractérisé en ce que** le dispositif de connexion (50) est conçu comme un dispositif de connexion enfichable avec des languettes de connexion enfichables (53) ou des prises de connexion enfichables, qui sont de préférence reliées électriquement et/ou structurellement ou mécaniquement à l'élément chauffant (40).

3. Dispositif selon la revendication 1 ou 2, **caractérisé en ce que** la connexion électrique comporte des champs de contact électriques (46, 48) reliés aux conducteurs chauffants (45) sur lesquels sont pressés des bras de contact à ressort (54) du dispositif de connexion (50), les bras de contact (54) s'étendant en particulier parallèlement les uns aux autres et les uns à côté des autres.

4. Dispositif selon l'une des revendications précédentes, **caractérisé en ce que** l'élément chauffant (40) est courbé à l'écart de la chambre de chauffage (28) à la manière d'un canal, de telle sorte qu'une ligne de crête de la courbure s'étende dans le sens de l'extension, la courbure de l'élément chauffant (40) correspondant de préférence à entre 5 % et 20 % de la largeur de l'élément chauffant (40), en particulier l'élément chauffant (40) a une forme rectangulaire en vue de dessus, la courbure étant de préférence un arrondi uniforme et l'élément chauffant (40) étant une section d'enveloppe représentant 5 % à 20 % d'un tuyau entier.

5. Dispositif selon l'une des revendications précédentes, **caractérisé en ce qu'**une rainure (36a, 36b) avec un joint (38) inséré dans celle-ci s'étend autour du bord périphérique (33a, 33b), l'élément chauffant (40) venant en butée de manière étanche contre le joint (38) sur toute sa circonférence.

6. Dispositif selon l'une des revendications précédentes, **caractérisé en ce que** le boîtier (22) comporte une partie supérieure (59) qui est fixée à l'auge (30), qui forme de préférence une partie inférieure du boîtier, de telle sorte que la partie supérieure du boîtier (59) presse l'élément chauffant (40) contre l'auge (30) ou contre le joint d'étanchéité (38) selon la revendication 5, dans lequel de préférence la partie supérieure du boîtier (59) comporte une nervure de pression circonférentielle (63) qui est opposée au bord périphérique (33a, 33b) ou qui s'étend à l'extérieur du bord périphérique (33a, 33b) au-dessus du joint d'étanchéité (38) selon la revendication 5, dans lequel en particulier la nervure de pression (63) s'étend de manière continue autour de la circonférence et presse de manière continue l'élément chauffant (40) contre le bord périphérique (33a, 33b) qui l'entoure de manière continue ou contre le joint d'étanchéité (38).

7. Dispositif selon l'une des revendications précédentes, **caractérisé en ce que** l'auge (30) ou une partie supérieure du boîtier (59) comporte des saillies d'appui (35a, 35b) sur le côté extérieur au bord périphérique (33a, 33b) sur lesquelles l'élément chauffant (40) repose avec un bord latéral, en particulier les bords latéraux à chaque extrémité de la courbure, afin de fixer la position de l'élément chauffant (40) dans le dispositif (21) et sur l'auge (30).

8. Dispositif selon l'une des revendications précédentes, **caractérisé en ce qu'**une partie supérieure du boîtier (59) est fixée de manière amovible à l'auge (30), en particulier au moyen d'une connexion à encliquetage (37, 61) ou au moyen d'une connexion à clip, dans lequel une fixation est prévue de préférence autour de la chambre de chauffage (28), de préférence également au niveau ou à proximité des zones d'extrémité de la chambre de chauffage (28) proches de l'entrée d'eau (24)/sortie de vapeur (26).

9. Dispositif selon l'une des revendications précédentes, **caractérisé en ce que** le dispositif de connexion électrique (50) est formé avec un boîtier de connexion (51) sur une partie supérieure du boîtier (59), dans lequel, en particulier, le boîtier de connexion (51) est formé d'un seul tenant et/ou ne dépasse pas du boîtier (22) dans le sens de l'épaisseur, dans lequel le boîtier de connexion (51) est de préférence ouvert sur au moins un côté, les unités de connexion (18) pouvant être insérées dans le boîtier de connexion (51) depuis ce côté et y être fixées de manière amovible, les unités de connexion (18) étant en contact électrique avec l'élément chauffant (40), en particulier au moyen des bras de contact (54) selon la revendication 3.

10. Dispositif selon la revendication 9, **caractérisé en ce que** les unités de connexion (18) comportent des languettes de connexion ou des prises de connexion (20) qui sont maintenues dans une pièce de retenue en plastique, dans lequel les bras de contact (54) selon la revendication 3 font de préférence saillie dans la direction d'insertion, dans lequel en particulier la pièce de retenue peut être insérée dans le boîtier de connexion (51) et peut y être fixée de manière amovible, de préférence au moyen d'un dispositif de verrouillage.

11. Dispositif selon l'une des revendications 7 à 10, **caractérisé en ce que** la partie supérieure du boîtier (59) s'étend à une distance comprise entre 1 mm et 20 mm au-dessus de l'élément chauffant (40), dans lequel, en particulier, la partie supérieure du boîtier (59) comporte des ouvertures de ventilation pour ventiler ou refroidir l'élément chauffant (40), la partie supérieure du boîtier (59) dans la zone au-dessus de l'élément chauffant (40) étant de préférence conçue pour être en grande partie en forme de nid d'abeilles avec des nervures et des espaces en forme de nid d'abeilles (60) entre celles-ci.

12. Appareil ménager à eau (11), en particulier four à vapeur ou cuiseur à vapeur, avec un boîtier extérieur (12) et une chambre de cuisson pour cuire des aliments à la vapeur, dans lequel, à l'extérieur de la chambre de cuisson, et en particulier derrière celle-ci à l'intérieur du boîtier extérieur (12), un dispositif (21) pour générer de la vapeur selon l'une des revendications précédentes est disposé sur l'appareil ménager à eau (11).

13. Appareil ménager à eau (11) selon la revendication 12, **caractérisé en ce que** le dispositif (21) pour générer de la vapeur est disposé verticalement dans sa direction longitudinale d'extension.
